# EUROPEAN PATENT APPLICATION

(11) **EP 0 962 339 A1**
(43) Date of publication of application: **08.12.1999**
(21) Application number: 99110223.7
(22) Date of filing: 26.05.1999
(51) Int. Cl.: B60C 1/00, C08L 15/00

(54) **Tire tread containing isoprenebutadiene rubber**

(30) Priority: 03.06.1998 US 89808
(71) Applicant: THE GOODYEAR TIRE & RUBBER COMPANY, Akron, Ohio 44316-0001 (US)
(72) Inventor: Blok, John Edward, Wadsworth, Ohio 44281 (US); Sandstrom, Paul Harry, Tallmadge, Ohio 44278 (US); Hsu, Wen-Liang, Cuyahoga Falls, Ohio 44223 (US); Halasa, Adel Farhan, Bath, Ohio 44333 (US)
(74) Representative: Leitz, Paul

(57) **Abstract**

This invention relates to a tire tread compound that is easily processable which can be used in manufacturing tires having outstanding treadwear, rolling resistance and traction characteristics. The tire tread compounds of this invention are a blend of tin-coupled isoprene-butadiene rubber, 3,4-polyisoprene rubber and natural rubber or synthetic polyisoprene. The tire tread compounds of this invention can be utilized in making tires having greatly improved rolling resistance without sacrificing processability, traction or treadwear characteristics. These improved properties may be due, in part, to better interaction and compatibility with carbon black and/or silica fillers. The isoprene-butadiene rubber in the blend can be asymmetrical tin-coupled to further improve the cold flow characteristics of the rubber blend. Asymmetrical tin coupling, in general, also leads to better processability and other beneficial properties. This invention more specifically discloses a tire tread rubber composition which is comprised of (1) about 20 phr to about 60 phr of tin-coupled isoprene-butadiene rubber, (2) about 20 phr to about 60 phr of a rubber selected from the group consisting of natural rubber and synthetic polyisoprene, (3) about 5 phr to about 40 phr of 3,4-polyisoprene rubber, (4) about 25 phr to about 50 phr of carbon black and (5) about 5 phr to about 30 phr of silica.

## Description

### Background of the Invention

Low rolling resistance is an important characteristic of tires because good fuel economy is virtually always an important consideration. To attain good rolling resistance, rubbers in the tire tread compound having high glass transition temperatures also generally have high molecular weights (a Mooney ML 1+4 viscosity of about 70 to about 90). Isoprene-butadiene rubber having a low glass transition temperature (Tg) can be utilized in such tire tread compounds to improve processing. However, when these low Tg isoprene-butadiene rubbers have a high molecular weight, the rubber compound becomes very difficult to process. On the other hand, decreasing the molecular weight of the isoprene-butadiene rubber improves processability but increases rolling resistance. The inclusion of low molecular weight isoprene-butadiene rubber in the tire tread rubber compound also increases cold flow which results in processing difficulties at tire manufacturing plants.

Good treadwear is also an important consideration because it is generally the most important factor which determines the life of the tire. The traction, treadwear and rolling resistance of a tire is dependent to a large extent on the dynamic viscoelastic properties of the elastomers utilized in making the tire tread. In order to reduce the rolling resistance of a tire, rubbers having a high rebound have traditionally been utilized in making the tire's tread. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubber material for automobile tire treads. However, such blends are not totally satisfactory for all purposes.

Rubbers having intermediate glass transition temperatures (-70°C to -40°C) compromise rolling resistance and treadwear without significantly increasing traction characteristics. For this reason, blends of rubbers having low glass transition temperatures and rubbers having high glass transition temperatures are frequently utilized to attain improved traction characteristics without significantly compromising rolling resistance or treadwear. However, such blends of rubbers having low glass transition temperatures and rubbers having high glass transition temperatures exhibit poor processability. This major disadvantage associated with such blends has greatly hampered their utilization in making tire tread compounds.

Tin-coupled polymers are known to provide desirable properties, such as improved treadwear and reduced rolling resistance, when used in tire tread rubbers. Such tin-coupled rubbery polymers are typically made by coupling the rubbery polymer with a tin coupling agent at or near the end of the polymerization used in synthesizing the rubbery polymer. In the coupling process, live polymer chain ends react with the tin coupling agent thereby coupling the polymer. For instance, up to four live chain ends can react with tin tetrahalides, such as tin tetrachloride, thereby coupling the polymer chains together.

### Summary of the Invention

This invention relates to a tire tread compound that is easily processable which can be used in manufacturing tires having outstanding treadwear, rolling resistance and traction characteristics. The tire tread compounds of this invention are a blend of tin-coupled isoprene-butadiene rubber, 3,4-polyisoprene rubber and natural rubber or synthetic polyisoprene. The tire tread compounds of this invention can be utilized in making tires having greatly improved rolling resistance without sacrificing processability, traction or treadwear characteristics. These improved properties may be due, in part, to better interaction and compatibility with carbon black and/or silica fillers. The isoprene-butadiene rubber in the blend can be asymmetrical tin-coupled to further improve the cold flow characteristics of the rubber blend. Asymmetrical tin coupling in general also leads to better processability and other beneficial properties.

This invention more specifically discloses a tire tread rubber composition which is comprised of (1) about 20 phr to about 60 phr of tin-coupled isoprene-butadiene rubber, (2) about 20 phr to about 60 phr of a rubber selected from the group consisting of natural rubber and synthetic polyisoprene, (3) about 5 phr to about 40 phr of 3,4-polyisoprene rubber, (4) about 25 phr to about 50 phr of carbon black and (5) about 5 phr to about 30 phr of silica.

It is normally preferred for the tin-coupled isoprene-butadiene rubber to be asymmetrically tin-coupled. In such cases, the stability of blends containing asymmetrical tin-coupled isoprene-butadiene rubber can be improved by adding a tertiary chelating amine thereto subsequent to the time at which the tin-coupled rubbery polymer is coupled. N,N,N',N'-tetramethylethylenediamine (TMEDA) is a representative example of a tertiary chelating amine which is preferred for utilization in stabilizing the polymer blends of this invention.

### Detailed Description of the Invention

The tire tread rubber compositions of this invention are comprised of (1) about 20 phr to about 60 phr of tin-coupled isoprene-butadiene rubber, (2) about 20 phr to about 60 phr of a rubber selected from the group consisting of natural rubber and synthetic polyisoprene, (3) about 5 phr to about 40 phr of 3,4-polyisoprene rubber, (4) about 25 phr to about 50 phr of carbon black and (5) about 5 phr to about 30 phr of silica. These tire tread rubbers will typically contain from about 25 phr to about 55 phr of the tin-coupled isoprene-butadiene rubber, from about 25 phr to about 55 phr of the rubber selected from the group consisting of natural rubber and synthetic polyisoprene and from about 10 phr to about 30 phr of the 3,4-polyisoprene rubber. It is normally preferred for the tire tread rubber to contain from about 30 phr to about 50 phr of the tin-coupled isoprene-butadiene rubber, from about 30 phr to about 50 phr of the rubber selected from the group consisting of natural rubber and synthetic polyisoprene and from about 15 phr to about 25 phr of the 3,4-polyisoprene rubber.

The 3,4-polyisoprene rubber employed in the blends of this invention will normally have a glass transition temperature which is within the range of about -55°C to about 25°C. The 3,4-polyisoprene rubber will also generally have a 3,4-isomer content which is within the range of about 15 percent to about 95 percent and a 1,2-isomer content which is within the range of about 5 percent to about 25 percent.

The 3,4-polyisoprene will also typically have a number average molecular weight of greater than about 50,000. The 3,4-polyisoprene will generally have a number average molecular weight which is within the range of about 100,000 to about 500,000 and will preferably have a number average molecular weight which is within the range of about 250,000 to about 400,000.

In order to maximize tire performance characteristics, a combination of a high Tg 3,4-polyisoprene and a 3,4-polyisoprene having a lower Tg can be employed in the tire tread compound. The high Tg 3,4-polyisoprene will typically have a Tg which is within the range of about 0°C to about 25°C. The high Tg 3,4-polyisoprene will more typically have a glass transition temperature which is within the range of about 5°C to about 20°C. The 3,4-polyisoprene having a lower Tg will have a Tg of less than about -5°C. The lower Tg 3,4-polyisoprene will typically have a Tg which is within the range of about -55°C to about -5°C. It is typically preferable for the lower Tg 3,4-polyisoprene to have a Tg which is within the range of about -30°C to about -10°C and it is generally more preferable for the lower Tg 3,4-polyisoprene to have a Tg which is within the range of about -20°C to about -10°C.

The weight ratio of high Tg 3,4-polyisoprene to lower Tg 3,4-polyisoprene will typically be within the range of about 0.1:1 to about 10:1. It is normally preferred for the weight ratio of high Tg 3,4-polyisoprene to lower Tg 3,4-polyisoprene to be within the range of about 0.5:1 to about 2:1. It is generally most preferred for the weight ratio of high Tg 3,4-polyisoprene to lower Tg 3,4-polyisoprene to be within the range of about 0.8:1 to about 1.2:1. The high Tg 3,4-polyisoprene and lower Tg 3,4-polyisoprene will normally be used in essentially equal amounts to attain optimal results.

The tin-coupled isoprene-butadiene rubber will typically have a Mooney ML 1+4 viscosity which is within the range of about 5 to about 40 before coupling and a Mooney ML 1+4 viscosity of about 60 to about 120 after coupling. The tin-coupled isoprene-butadiene rubber will preferably have a Mooney ML 1+4 viscosity which is within the range of about 5 to about 35 before coupling and a Mooney ML 1+4 viscosity of about 75 to about 110 after coupling. The tin-coupled isoprene-butadiene will most preferably have a Mooney ML 1+4 viscosity which is within the range of about 10 to about 30 before coupling and a Mooney ML 1+4 viscosity of about 80 to about 100 after coupling.

The tin-coupled isoprene-butadiene rubber will typically be prepared by reacting "living" isoprene-butadiene rubber having lithium end groups with a tin halide, such as tin tetrachloride. This coupling step will normally be carried out as a batch process. However, it is generally preferred to tin-couple the isoprene-butadiene rubber in a continuous process which results in the formation of asymmetrically tin-coupled isoprene-butadiene rubber. A technique for producing asymmetrically tin-coupled isoprene-butadiene rubber is disclosed in United States Provisional Patent Application Serial No. 60/037,929, filed on February 14, 1997. The teachings of United States Provisional Patent Application Serial No. 60/037,929 are hereby incorporated herein by reference in their entirety.

The tin coupling agent employed in making asymmetrically tin-coupled isoprene-butadiene rubber will normally be a tin tetrahalide, such as tin tetrachloride, tin tetrabromide, tin tetrafluoride or tin tetraiodide. However, tin trihalides can also optionally be used. In cases where tin trihalides are utilized, a coupled polymer having a maximum of three arms results. To induce a higher level of branching, tin tetrahalides are normally preferred. As a general rule, tin tetrachloride is most preferred.

Broadly, and exemplary, a range of about 0.01 to 4.5 milliequivalents of tin coupling agent is employed per 100 grams of the rubbery polymer. It is normally preferred to utilize about 0.01 to about 1.5 milliequivalents of the tin coupling agent per 100 grams of polymer to obtain the desired Mooney viscosity. The larger quantities tend to result in production of polymers containing terminally reactive groups or insufficient coupling. One equivalent of tin coupling agent per equivalent of lithium is considered an optimum amount for maximum branching. For instance, if a tin tetrahalide is used as the coupling agent, one mole of the tin tetrahalide would be utilized per four moles of live lithium ends. In cases where a tin trihalide is used as the coupling agent, one mole of the tin trihalide will optimally be utilized for every three moles of live lithium ends. The tin coupling agent can be added in a hydrocarbon solution (e.g., in cyclohexane) to the polymerization admixture in the reactor with suitable mixing for distribution and reaction.

After the tin coupling has been completed, a tertiary chelating alkyl 1,2-ethylene diamine can optionally be added to the polymer cement to stabilize the tin-coupled rubbery polymer. This technique for stabilization of the tin-coupled rubber is more fully described in United States Patent 5,739,182. The teachings of United States Patent 5,739,182 are incorporated herein by reference in their entirety. The tertiary chelating amines which can be used for stabilization are normally chelating alkyl diamines of the structural formula: 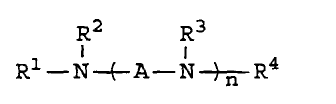 wherein n represents an integer from 1 to about 6, wherein A represents an alkane group containing from 1 to about 6 carbon atoms and wherein R¹, R², R³ and R⁴ can be the same or different and represent alkane groups containing from 1 to about 6 carbon atoms. The alkane group A is the formula (̵CH₂)̵ₘ wherein m is an integer from 1 to about 6. The alkane group will typically contain from 1 to 4 carbon atoms (m will be 1 to 4) and will preferably contain 2 carbon atoms. In most cases, n will be an integer from 1 to about 3 with it being preferred for n to be 1. It is preferred for R¹, R², R³ and R⁴ to represent alkane groups which contain from 1 to 3 carbon atoms. In most cases, R¹, R², R³ and R⁴ will represent methyl groups.

A sufficient amount of the chelating amine should be added to complex with any residual tin coupling agent remaining after completion of the coupling reaction. In most cases, from about 0.01 phr (parts by weight per 100 parts by weight of dry rubber) to about 2 phr of the chelating alkyl 1,2-ethylene diamine will be added to the polymer cement to stabilize the rubbery polymer. Typically, from about 0.05 phr to about 1 phr of the chelating alkyl 1,2-ethylene diamine will be added. More typically, from about 0.1 phr to about 0.6 phr of the chelating alkyl 1,2-ethylene diamine will be added to the polymer cement to stabilize the rubbery polymer.

After the polymerization, asymmetrical tin coupling and optionally the stabilization step has been completed, the tin-coupled isoprene-butadiene rubber can be recovered from the organic solvent utilized in the solution polymerization. The tin-coupled rubbery polymer can be recovered from the organic solvent and residue by means such as decantation, filtration, centrification and the like. It is often desirable to precipitate the tin-coupled rubbery polymer from the organic solvent by the addition of lower alcohols containing from about 1 to about 4 carbon atoms to the polymer solution. Suitable lower alcohols for precipitation of the rubber from the polymer cement include methanol, ethanol, isopropyl alcohol, normal-propyl alcohol and t-butyl alcohol. The utilization of lower alcohols to precipitate the tin-coupled rubbery polymer from the polymer cement also "kills" any remaining living polymer by inactivating lithium end groups. After the tin-coupled rubbery polymer is recovered from the solution, steam-stripping can be employed to reduce the level of volatile organic compounds in the tin-coupled rubbery polymer.

The asymmetrical tin-coupled isoprene-butadiene rubber that can be employed in the blends of this invention are comprised of a tin atom having at least three isoprene-butadiene arms covalently bonded thereto. At least one of the isoprene-butadiene arms bonded to the tin atom has a number average molecular weight of less than about 40,000 and at least one of the isoprene-butadiene arms bonded to the tin atom has a number average molecular weight of at least about 80,000. The ratio of the weight average molecular weight to the number average molecular weight of the asymmetrical tin-coupled isoprene-butadiene rubber will also normally be within the range of about 2 to about 2.5.

The asymmetrical tin-coupled isoprene-butadiene rubber that can be utilized in the blends of this invention is typically of the structural formula: 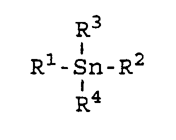 wherein R¹, R², R³ and R⁴ can be the same or different and are selected from the group consisting of alkyl groups and isoprene-butadiene arms (isoprene-butadiene rubber chains), with the proviso that at least three members selected from the group consisting of R¹, R², R³ and R⁴ are isoprene-butadiene arms, with the proviso that at least one member selected from the group consisting of R¹, R², R³ and R⁴ is a low molecular weight isoprene-butadiene arm having a number average molecular weight of less than about 40,000, with the proviso that at least one member selected from the group consisting of R¹, R², R³ and R⁴ is a high molecular weight isoprene-butadiene arm having a number average molecular weight of greater than about 80,000, and with the proviso that the ratio of the weight average molecular weight to the number average molecular weight of the asymmetrical tin-coupled isoprene-butadiene rubber is within the range of about 2 to about 2.5. It should be noted that R¹, R², R³ and R⁴ can be alkyl groups because it is possible for the tin halide coupling agent to react directly with alkyl lithium compounds which are used as the polymerization initiator.

In most cases, four isoprene-butadiene arms will be covalently bonded to the tin atom in the asymmetrical tin-coupled isoprene-butadiene rubber. In such cases, R¹, R², R³ and R⁴ will all be isoprene-butadiene arms. The asymmetrical tin-coupled isoprene-butadiene rubber will often contain an isoprene-butadiene arm of intermediate molecular weight as well as the low molecular weight arm and the high molecular weight arm. Such intermediate molecular weight arms will have a molecular weight which is within the range of about 45,000 to about 75,000. It is normally preferred for the low molecular isoprene-butadiene arm to have a molecular weight of less than about 30,000, with it being most preferred for the low molecular weight arm to have a molecular weight of less than about 25,000. It is normally preferred for the high molecular isoprene-butadiene arm to have a molecular weight of greater than about 90,000, with it being most preferred for the high molecular weight arm to have a molecular weight of greater than about 100,000.

The tire tread rubber compositions of this invention can be compounded utilizing conventional ingredients and standard techniques. For instance, these tire tread rubber blends will typically be mixed with carbon black, silica, sulfur, fillers, accelerators, oils, waxes, scorch inhibiting agents and processing aids. In most cases, the rubber blend will be compounded with sulfur and/or a sulfur-containing compound, carbon black, silica, at least one accelerator, at least one antidegradant, at least one processing oil, zinc oxide, optionally a tackifier resin, optionally a reinforcing resin, optionally one or more fatty acids, optionally a peptizer and optionally one or more scorch inhibiting agents. Such blends will normally contain from about 0.5 to 5 phr (parts per hundred parts of rubber by weight) of sulfur and/or a sulfur-containing compound with 1 phr to 2.5 phr being preferred. It may be desirable to utilize insoluble sulfur in cases where bloom is a problem.

In the tread rubber compounds of this invention, a combination of silica and carbon black will be used as the filler. The silica will be utilized at a level which is within the range of about 5 phr to about 30 phr and the carbon black will be utilized at a level which is within the range of about 25 phr to about 50 phr. Clays and/or talc can be included in the filler to reduce cost. The blend will also normally include from 0.1 to 2.5 phr of at least one accelerator with 0.2 to 1.5 phr being preferred. Antidegradants, such as antioxidants and antiozonants, will generally be included in the tread compound blend in amounts ranging from 0.25 to 10 phr with amounts in the range of 1 to 5 phr being preferred. Processing oils will generally be included in the blend in amounts ranging from 2 to 100 phr with amounts ranging from 5 to 50 phr being preferred. The rubber blends of this invention will also normally contain from 0.5 to 10 phr of zinc oxide with 1 to 5 phr being preferred. These rubber blends can optionally contain from 0 to 10 phr of tackifier resins, 0 to 10 phr of reinforcing resins, 1 to 10 phr of fatty acids, 0 to 2.5 phr of peptizers and 0 to 1 phr of scorch inhibiting agents.

To fully realize the total advantages of the blends of this invention, the processing of the rubber blend is normally conducted in the presence of a sulfur containing organosilicon compound. Examples of suitable sulfur-containing organosilicon compounds are of the formula:

Z-Alk-Sₙ-Alk-Z (I)

in which Z is selected from the group consisting of 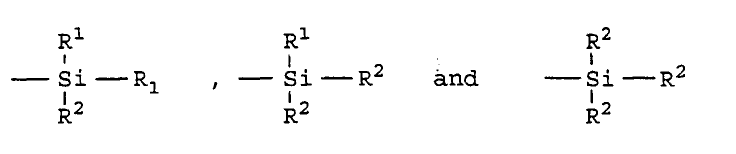 where R¹ is an alkyl group of 1 to 4 carbon atoms, cyclohexyl or phenyl; wherein R² is alkoxy of 1 to 8 carbon atoms or cycloalkoxy of 5 to 8 carbon atoms; and wherein Alk is a divalent hydrocarbon of 1 to 18 carbon atoms and n is an integer of 2 to 8.

Specific examples of sulfur-containing organosilicon compounds which may be used in accordance with the present invention include: 3,3'-bis(trimethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2''-ethylhexoxysilylpropyl) trisulfide, 3,3'-bis(triisooctoxysilylpropyl) tetrasulfide, 3,3'-bis(tri-t-butoxysilylpropyl) disulfide, 2,2'-bis(methoxy diethoxy silyl ethyl) tetrasulfide, 2,2'-bis(tripropoxysilylethyl) pentasulfide, 3,3'-bis(tricyclonexoxysilylpropyl) tetrasulfide, 3,3'-bis(tricyclopentoxysilylpropyl) trisulfide, 2,2'-bis(tri-2''-methylcyclohexoxysilylethyl) tetrasulfide, bis(trimethoxysilylmethyl) tetrasulfide, 3-methoxy ethoxy propoxysilyl 3'-diethoxybutoxysilylpropyltetrasulfide, 2,2'-bis(dimethyl methoxysilylethyl) disulfide, 2,2'-bis(dimethyl sec.butoxysilylethyl) trisulfide, 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide, 2,2'-bis(methyl dimethoxysilylethyl) trisulfide, 2,2'-bis(methyl ethoxypropoxysilylethyl) tetrasulfide, 3,3'-bis(diethyl methoxysilylpropyl) tetrasulfide, 3,3'-bis(ethyl di-sec. butoxysilylpropyl) disulfide, 3,3'-bis(propyl diethoxysilylpropyl) disulfide, 3,3'-bis(butyl dimethoxysilylpropyl) trisulfide, 3,3'-bis(phenyl dimethoxysilylpropyl) tetrasulfide, 3-phenyl ethoxybutoxysilyl 3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyl dodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilyl-buten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide.

The preferred sulfur-containing organosilicon compounds are the 3,3'-bis(trimethoxy or triethoxy silylpropyl) sulfides. The most preferred compound is 3,3'-bis(triethoxysilylpropyl) tetrasulfide. Therefore, as to Formula I, preferably Z is 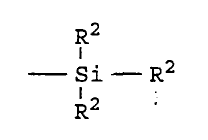 where R² is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 3 to 5 with 4 being particularly preferred.

The amount of the sulfur-containing organosilicon compound of Formula I in a rubber composition will vary, depending on the level of silica that is used. Generally speaking, the amount of the compound of Formula I will range from about 0.01 to about 1.0 parts by weight per part by weight of the silica. Preferably, the amount will range from about 0.02 to about 0.4 parts by weight per part by weight of the silica. More preferably, the amount of the compound of Formula I will range from about 0.05 to about 0.25 parts by weight per part by weight of the silica. It is to be appreciated that the silica coupler may be used in conjunction with carbon black, namely pre-mixed with carbon black prior to addition to the rubber composition, and such carbon black is to be included in the aforesaid amount of carbon black for the rubber composition formulation.

The commonly employed siliceous pigments used in rubber compounding applications can be used as the silica in this invention, including pyrogenic and precipitated siliceous pigments (silica), although precipitate silicas are preferred. The siliceous pigments preferably employed in this invention are precipitated silicas such as, for example, those obtained by the acidification of a soluble silicate; e.g., sodium silicate.

Such silicas might be characterized, for example, by having a BET surface area, as measured using nitrogen gas, preferably in the range of about 40 to about 600, and more usually in a range of about 50 to about 300 square meters per gram. The BET method of measuring surface area is described in the Journal of the American Chemical Society, Volume 60, page 304 (1930).

The silica may also be typically characterized by having a dibutylphthalate (DBP) absorption value in a range of about 100 to about 400, and more usually about 150 to about 300. The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3.

Tire tread formulations will typically be mixed utilizing a thermomechanical mixing technique. The mixing of the tire tread rubber formulation can be accomplished by methods known to those having skill in the rubber mixing art. For example, the ingredients are typically mixed in at least two stages, namely at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber, silica and sulfur-containing organosilicon, and carbon black, if used, are mixed in one or more non-productive mix stages. The terms "non-productive" and "productive" mix stages are well known to those having skill in the rubber mixing art. The sulfur-vulcanizable rubber composition containing the sulfur-containing organosilicon compound, vulcanizable rubber and generally at least part of the silica should be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be for a duration of time which is within the range of about 2 minutes to about 20 minutes. It will normally be preferred for the rubber to reach a temperature which is within the range of about 145°C to about 180°C and to be maintained at said temperature for a period of time which is within the range of about 4 minutes to about 12 minutes. It will normally be more preferred for the rubber to reach a temperature which is within the range of about 155°C to about 170°C and to be maintained at said temperature for a period of time which is within the range of about 5 minutes to about 10 minutes.

The tire tread compounds of this invention can be used in tire treads in conjunction with ordinary tire manufacturing techniques. Tires are built utilizing standard procedures with the rubber blend of this invention simply being substituted for the rubber compounds typically used as the tread rubber. After the tire has been built with the isoprene-butadiene rubber-containing blend, it can be vulcanized using a normal tire cure cycle. Tires made in accordance with this invention can be cured over a wide temperature range. However, it is generally preferred for the tires of this invention to be cured at a temperature ranging from about 132°C (270°F) to about 166°C (330°F). It is more typical for the tires of this invention to be cured at a temperature ranging from about 143°C (290°F) to about 154°C (310°F). It is generally preferred for the cure cycle used to vulcanize the tires of this invention to have a duration of about 10 to about 20 minutes with a cure cycle of about 12 to about 18 minutes being most preferred.

By utilizing the rubber blends of this invention in tire tread compounds, processing characteristics can be improved without compromising treadwear or rolling resistance. Since the rubber blends of this invention do not contain styrene, the cost of raw materials can also be reduced. This is because styrene and other vinyl aromatic monomers are expensive relative to the cost of 1,3-butadiene and isoprene.

This invention is illustrated by the following examples which are merely for the purpose of illustration and are not to be regarded as limiting the scope of the invention or the manner in which it can be practiced. Unless specifically indicated otherwise, parts and percentages are given by weight.

### Example 1

In this experiment, a coupled isoprene-butadiene rubber (IBR) was prepared in a one-gallon (3.8 liters) batch reactor at 70°C. In the procedure used, 2,000 grams of a silica/molecular sieve/aluminum dried premix containing 19.0 weight percent of a mixture of isoprene and 1,3-butadiene in hexanes at the ratio of 10:90 was charged into a one-gallon (3.8 liters) reactor. After the amount of impurity in the premix was determined, 4.0 ml of a 1.0 M solution of n-butyl lithium (in hexane) was added to the reactor. The target Mn (number averaged molecular weight) was 100,000. The polymerization was allowed to proceed at 70°C for three hours. An analysis of the residual monomer indicated that monomers were all consumed. Then, 1.0 ml of a 1 M solution of tin tetrachloride (in hexane) was added to the reactor and the coupling reaction was carried out at the same temperature for 30 minutes. At this time, 1.5 phr (parts per 100 parts by weight of rubber) of 4-t-butylcatechol and 0.5 phr of TMEDA was added to the reactor to shortstop the polymerization and to stabilize the polymer.

After the hexane solvent was evaporated, the resulting IBR was dried in a vacuum oven at 50°C. The coupled IBR was determined to have a glass transition temperature (Tg) at -95°C. It was also determined to have a microstructure which contained 7 percent 1,2-polybutadiene units, 87 percent 1,4-polybutadiene units, 1 percent 3,4-polyisoprene units and 9 percent 1,4-polyisoprene units. The Mooney viscosity (ML-4) of the coupled IBR made was determined to be 99.

### Examples 2-4

The procedure described in Example 1 was utilized in these examples except that the isoprene to 1,3-butadiene ratio were changed from 10:90 to 15:85, 20:80 and 30:70. The Tgs, Mooney viscosities (ML-4) and microstructures of these tin-coupled IBRs are listed in Table I. The 30/70 IBR (Example 4) was determined to have an Mn (number averaged molecular weight) of 386,000 and a Mw (weight averaged molecular weight) of 430,000. The precursor of Example 4 (ie, base polymer prior to coupling) was also determined to have an Mn of 99,000 and an Mw of 112,000.

**TABLE I**

| Ex. | Isoprene/Bd Composition | Tg (°C) | ML-4 | Microstructure (%) | | | |
|---|---|---|---|---|---|---|---|
| | | | | 1,2-PBd | 1,4-PBd | 3,4-PI | 1,4-PI |
| 1 | 10/90 | -95 | 99 | 7 | 83 | 2 | 8 |
| 2 | 15/85 | -93 | 91 | 8 | 77 | 1 | 14 |
| 3 | 20/80 | -90 | 82 | 8 | 72 | 1 | 19 |
| 4 | 30/70 | -87 | 84 | 7 | 63 | 3 | 27 |

### Examples 5-8

In these examples, linear IBRs were prepared in a one-gallon reactor. The procedure described in Example 1 was utilized in these examples except that no coupling agent (tin tetrachloride) was used in these experiments and the target Mn was changed to 300,000 from 100,000. The isoprene to 1,3-butadiene ratios were 10:90, 15:85, 20:80 and 30:70. The Tgs, Mooney viscosities (ML-4), Mns (number averaged molecular weights), Mws (weight averaged molecular weights) and microstructures of these linear IBRs are listed in Table II.

**TABLE II**

| Ex. | Isoprene/Bd Composition | Tg (°C) | ML-4 | Mn | Mw | Microstructure (%) | | | |
|---|---|---|---|---|---|---|---|---|---|
| | | | | | | 1,2-PBd | 1,4-PBd | 3,4-PI | 1,4-PI |
| 1 | 10/90 | -96 | 88 | 308K | 326K | 7 | 83 | 1 | 9 |
| 2 | 15/85 | -94 | 81 | 307K | 329K | 7 | 77 | 1 | 15 |
| 3 | 20/80 | -92 | 82 | 317K | 338K | 7 | 72 | 1 | 20 |
| 4 | 30/70 | -89 | 87 | 313K | 332K | 6 | 62 | 2 | 30 |

### Example 9

The tin-coupled IBR prepared in this experiment was synthesized in a three-reactor (10 gallons each) continuous system at 90°C. A premix containing isoprene and 1,3-butadiene in hexane was charged into the first reactor continuously at a rate of 65.6 grams/minute. The premix monomer solution contained a ratio of isoprene to 1,3-butadiene of 30:70 and had a total monomer concentration of 14 percent. Polymerization was initiated by adding 0.128 M solution of n-butyl lithium into the first reactor at a rate of 0.4 grams per minute. Most of the monomers were exhausted at the end of the second reactor and the resulted polymerization medium containing the live ends was continuously pushed into the third reactor where the coupling agent, tin tetrachloride (0.025 M solution in hexane), was added at a rate of 0.34 grams per minute. The residence time for all three reactors was set at 1.5 hours to achieve complete monomer conversion in the second reactor and complete coupling in the third reactor. The polymerization medium was then continuously pushed over to a holding tank containing the TMEDA and an antioxidant. The resulting polymer cement was then steam-stripped and the recovered IBR was dried in an oven at 60°C. The polymer was determined to have a glass transition temperature at -85°C and have a Mooney ML-4 viscosity of 90. It was also determined to have a microstructure which contained 8 percent 1,2-polybutadiene units, 60 percent 1,4-polybutadiene units, 29 percent 1,4-polyisoprene units and 3 percent 3,4-polyisoprene units. The polymer was determined to have a Mn (number averaged molecular weight) of 185,000 and a Mw (weight averaged molecular weight) of 276,000. The precursor of this polymer (i.e., base polymer prior to coupling) was also determined to have an Mn of 88,000 and an Mw of 151,000.

Unlike the Example 4 (prepared and coupled in a batch process) which showed a symmetrical coupling of four linear precursor polymers, the polymer produced in this example via the continuous process had unsymmetrical coupling based on GPC molecular data shown above.

### Example 10 and Comparative Examples 11

In this series of experiments, rubber blends were prepared, cured and evaluated as tire tread rubber compositions. These tread rubber compounds contained 45 phr of an isoprene-butadiene rubber (IBR), 15 phr of 3,4-polyisoprene having a Tg of -17°C, 40 phr of natural rubber, 17 phr of silica, 3.25 phr of Si69 silica coupling agent, 35 phr of carbon black, 9 phr of a processing oil, 2.97 phr of an antioxidant, 1.5 phr of wax, 1.5 phr of stearic acid, 3 phr of zinc oxide, 1.27 phr of accelerators and 1.5 phr of sulfur. The isoprene-butadiene rubber employed in Example 10 was tin-coupled, had a Tg of -83°C and had a Mooney ML 1+4 viscosity of 73. Example 11 was carried out as a comparative experiment with a conventional isoprene-butadiene rubber having a Tg of -83°C and a Mooney ML 1+4 viscosity of 85 being utilized in the rubber compound. The physical characteristics of these rubber blends are reported in Table III.

**TABLE III**

| Example | 10 | 11 |
|---|---|---|
| Natural Rubber | 40 | 40 |
| IBR (not coupled) | - | 45 |
| Tin-Coupled IBR | 45 | - |
| 3,4-Polyisoprene | 15 | 15 |

| Rheometer @ 150°C | | |
|---|---|---|
| ML, dNm | 10.8 | 7.2 |
| MH, dNm | 44.0 | 41.0 |
| delta torque | 33.2 | 33.8 |
| T25 | 4.75 | 4.75 |
| T90 | 7.5 | 8.0 |

| ATS 15 @ 150°C | | |
|---|---|---|
| 100% Modulus, MPa | 2.4 | 2.4 |
| 300% Modulus, MPa | 10.8 | 11.0 |
| Brk Str, MPa | 15.8 | 16.6 |
| EL-Brk, % | 436 | 447 |
| Hardness, RT | 61 | 63 |
| Hardness, 100°C | 58 | 60 |
| Rebound RT % | 52.4 | 53.3 |
| Rebound, 100°C | 68.5 | 69.1 |
| DIN Abrasion, 2.5 N | 78 | 87 |
| DIN Abrasion, 10 N | 74 | 86 |

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A tire tread rubber composition which is characterized by being comprised of (1) 20 phr to 60 phr of tin-coupled isoprene-butadiene rubber, (2) 20 phr to 60 phr of a rubber selected from the group consisting of natural rubber and synthetic polyisoprene, (3) 5 phr to 40 phr of 3,4-polyisoprene rubber, (4) 25 phr to 50 phr of carbon black and (5) 5 phr to 30 phr of silica.

2. A tire tread rubber composition as specified in claim 1 characterized in that said tin-coupled isoprene-butadiene rubber has a Mooney viscosity which is within the range of 60 to 120.

3. A tire tread rubber composition as specified in claim 1 or 2 characterized in that said high 3,4-polyisoprene rubber has a glass transition temperature which is within the range of -55°C to 25°C; and characterized in that said 3,4-polyisoprene rubber has a number average molecular weight of greater than 50,000.

4. A tire tread rubber composition as specified in claim 1, 2 or 3 characterized in that the tire tread rubber composition contains from 25 phr to 55 phr of the tin-coupled isoprene-butadiene rubber, from 25 phr to 55 phr of the rubber selected from the group consisting of natural rubber and synthetic polyisoprene and from 10 phr to 30 phr of the 3,4-polyisoprene rubber.

5. A tire tread rubber composition as specified in claim 1, 2 or 3 characterized in that the tire tread rubber composition contains from 30 phr to 50 phr of the tin-coupled isoprene-butadiene rubber, from 30 phr to 50 phr of the rubber selected from the group consisting of natural rubber and synthetic polyisoprene and from 15 phr to 25 phr of the 3,4-polyisoprene rubber.

6. A tire tread rubber composition as specified in any of the preceding claims characterized in that the 3,4-polyisoprene rubber has a number average molecular weight which is within the range of 100,000 to 500,000.

7. A tire tread rubber composition as specified in any of the preceding claims characterized in that the 3,4-polyisoprene rubber is a blend of a lower Tg 3,4-polyisoprene having a glass transition temperature which is within the range of -55°C to -5°C and a high Tg 3,4-polyisoprene rubber having a glass transition temperature which is within the range of 0°C to 25°C.

8. A tire tread rubber composition as specified in any of the preceding claims characterized in that said tin-coupled isoprene-butadiene rubber has a Mooney viscosity which is within the range of 80 to 100.

9. A tire tread rubber composition as specified in any of the preceding claims characterized in that the tin-coupled isoprene-butadiene rubber is asymmetrically tin-coupled isoprene-butadiene rubber of the structural formula: 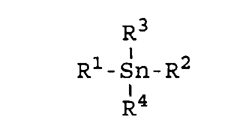 wherein R¹, R², R³ and R⁴ can be the same or different and are selected from the group consisting of alkyl groups and isoprene-butadiene arms, with the proviso that at least three members selected from the group consisting of R¹, R², R³ and R⁴ are isoprene-butadiene arms, with the proviso that at least one member selected from the group consisting of R¹, R², R³ and R⁴ is a low molecular weight isoprene-butadiene arm having a number average molecular weight of less than 40,000, with the proviso that at least one member selected from the group consisting of R¹, R², R³ and R⁴ is a high molecular weight isoprene-butadiene arm having a number average molecular weight of greater than 80,000 and with the proviso that the ratio of the weight average molecular weight to the number average molecular weight of the asymmetrical tin-coupled isoprene-butadiene rubber is within the range of 2 to 2.5.

10. A tire tread rubber composition as specified in any of the preceding claims characterized in that R¹, R², R³ and R⁴ are all isoprene-butadiene arms; and characterized in that the member selected from the group consisting of natural rubber and synthetic polyisoprene is natural rubber.
